(19) Europäisches Patentamt
European Patent Office
Office européen des brevets

(11) **EP 2 728 550 A1**

(12) **EUROPEAN PATENT APPLICATION**
published in accordance with Art. 153(4) EPC

(43) Date of publication:
**07.05.2014 Bulletin 2014/19**

(51) Int Cl.:
**G06T 7/20** (2006.01)  **B60K 28/06** (2006.01)
**G06T 1/00** (2006.01)  **G08G 1/16** (2006.01)

(21) Application number: **12807396.2**

(22) Date of filing: **15.06.2012**

(86) International application number:
**PCT/JP2012/065435**

(87) International publication number:
**WO 2013/005560 (10.01.2013 Gazette 2013/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.07.2011  JP 2011147470**

(71) Applicant: **Aisin Seiki Kabushiki Kaisha
Kariya-shi, Aichi 448-8650 (JP)**

(72) Inventors:
• **ONO Kazuyuki**
  **Kariya-shi, Aichi-ken 448-8650 (JP)**
• **HIRAMAKI Takashi**
  **Kariya-shi, Aichi-ken 448-8650 (JP)**

(74) Representative: **TBK
Bavariaring 4-6
80336 München (DE)**

(54) **EYELID DETECTION DEVICE, EYELID DETECTION METHOD, AND PROGRAM**

(57)    Distances between edges which are detected and paired from images which show a driver's face are computed sequentially. Based on a change in the computed distances, a low-probability candidate for a pair of eyelid edges is eliminated. The edge pairs ultimately remaining as a result thereof are detected as upper eyelid edge and lower eyelid edge pairings. It is thus possible to carry out a detection which takes into account not only a feature which is near to an eyelid edge, but also movement as an eyelid. Accordingly, it is possible to accurately detect edges of a driver's eyelids.

FIG.3

**EP 2 728 550 A1**

## Description

Technical Field

The present invention relates to an eyelid detection device, eyelid detection method and program, and more particularly to an eyelid detection device for detecting eyelids from an image of eyes, and an eyelid detection method and program for detecting eyelids from an image of eyes.

Background Art

In recent years, the incidence of traffic accidents has remained at a high level. There are various factors in accidents, and one of the factors that leads to accidents is a driver operating a vehicle when in a state of reduced wakefulness, such as falling asleep at the wheel. Hence, various technologies have been proposed for detecting with good precision movement of the eyelids as an indicator when determining the wakefulness of the driver (for example, see Patent Literature 1 and 2).

Citation List

Patent Literature

Patent Literature 1: Unexamined Japanese Patent Application Kokai Publication No. 2009-125518
Patent Literature 2: Unexamined Japanese Patent Application Kokai Publication No. H9-230436

Summary of Invention

Technical Problem

The device disclosed in Patent Literature 1 generates a difference image from photographs of a driver's face. Furthermore, this device determines that the driver is blinking when there is an afterimage of the eyelids in the difference image. However, when the driver's entire face moves, there are cases when an afterimage of the eyelids appears despite the fact that the eyelids are not moving. In this kind of case, with the device disclosed in Patent Literature 1 it is thought to be difficult to accurately determine whether or not the driver is blinking.

The device disclosed in Patent Literature 2 determines whether or not the driver is blinking using the fact that the strength of reflected light reflected by the driver's eyes changes between when the eyes are open and when the eyes are closed. However, when the strength of light incident on the driver's eyes changes accompanying changes in the environment surrounding the driver, the strength of reflected light changes regardless of blinking occurring or not. In this kind of case, with the device disclosed in Patent Literature 2 it is considered difficult to accurately determine whether or not the driver is blinking.

In consideration of the foregoing, it is an objective of the present invention to accurately detect the driver's eyelids.

Solution to Problem

In order to achieve the above objective, the eyelid detection device according to a first aspect of the present invention comprises:

edge detector means for detecting edges from images of the face of a driver successively photographed in a prescribed interval;
extraction means for extracting first edges that are candidates for upper eyelid edges of the driver and second edges that are candidates for lower eyelid edges, from the detected edges;
pairing means for pairing the first edges and the second edges;
threshold calculation means for calculating, in accordance with changes in the distances between the paired first edges and second edges, a threshold value larger than the minimum value of the distances and smaller than the maximum value of the distances;
determination means for determining whether or not to exclude first edges from candidates for an upper eyelid edge of the driver and determining whether or not to exclude second edges from candidates for a lower eyelid edge of the driver, based on the frequency with which the distance is at least as great as the threshold value; and

detection means for excluding first edges and second edges based on determination results from the determination means, and detecting a pair constituting an upper eyelid edge and a lower eyelid edge of the driver, from among the remaining pairs of first edges and second edges.

The eyelid detection method according to a second aspect of the present invention includes:

a process for detecting edges from images of the face of a driver successively photographed in a prescribed interval;
a process for extracting first edges that are candidates for upper eyelid edges of the driver and second edges that are candidates for lower eyelid edges, from the detected edges;
a process for pairing the first edges and the second edges;
a process for calculating, in accordance with changes in the distances between the paired first edges and second edges, a threshold value larger than the minimum value of the distances and smaller than the maximum value of the distances;
a process for determining whether or not to exclude first edges from candidates for an upper eyelid edge of the driver and determining whether or not to exclude second edges from candidates for a lower eyelid edge of the driver, based on the frequency with which the distance is at least as great as the threshold value; and
a process for excluding first edges and second edges based on determination results from the determination, and detecting a pair constituting an upper eyelid edge and a lower eyelid edge of the driver, from among the remaining pairs of first edges and second edges.

The program according to a third aspect of the present invention causes a computer to execute:

a procedure for detecting edges from images of the face of a driver successively photographed in a prescribed interval;
a procedure for extracting first edges that are candidates for upper eyelid edges of the driver and second edges that are candidates for lower eyelid edges, from the detected edges;
a procedure for pairing the first edges and the second edges;
a procedure for calculating, in accordance with changes in the distances between the paired first edges and second edges, a threshold value larger than the minimum value of the distances and smaller than the maximum value of the distances;
a procedure for determining whether or not to exclude first edges from candidates for an upper eyelid edge of the driver and determining whether or not to exclude second edges from candidates for a lower eyelid edge of the driver, based on the frequency with which the distance is at least as great as the threshold value; and
a procedure for excluding first edges and second edges based on determination results from the determination, and detecting a pair constituting an upper eyelid edge and a lower eyelid edge of the driver, from among the remaining pairs of first edges and second edges.

Advantageous Effects of Invention

With the present invention, candidates for the edges of the eyelids are extracted and paired from among edges detected from an image of the driver's face. Furthermore, pairs of edges of the driver's eyelids are detected based on changes with time in the distance between the paired edges. Consequently, even if the driver momentarily moves his or her face or the surrounding environment temporarily changes, by observing for a fixed period the change with time, it is possible to accurately detect the edges of the driver's eyelids. As a result, it is possible to accurately determine how awake the driver is.

Brief Description of Drawings

FIG. 1 is a block diagram of an eyelid detection device according to a first preferred embodiment;
FIG. 2 is a drawing showing an image shot by a photography device;
FIG. 3 is a flowchart showing a series of processes executed by a CPU;
FIG. 4 is a drawing showing a horizontal edge detection operator;
FIG. 5 is a drawing showing a vertical edge detection operator;
FIG. 6 is a drawing showing edges detected from an image;
FIG. 7 is a drawing showing eyelid edge candidates;
FIG. 8 is a drawing for explaining a sequence of computing the distance between edges;
FIG. 9 is a drawing for explaining a sequence for detecting eyelid edges;

FIG. 10 is a drawing for explaining a sequence for detecting eyelid edges;

FIG. 11 is a drawing for explaining a sequence for detecting eyelid edges;

FIG. 12 is a drawing for explaining a sequence for detecting eyelid edges;

FIG. 13 is a drawing for explaining a sequence for detecting eyelid edges; and

FIG. 14 is a block diagram of an eyelid detection device according to a second preferred embodiment.

Description of Embodiments

(First preferred embodiment)

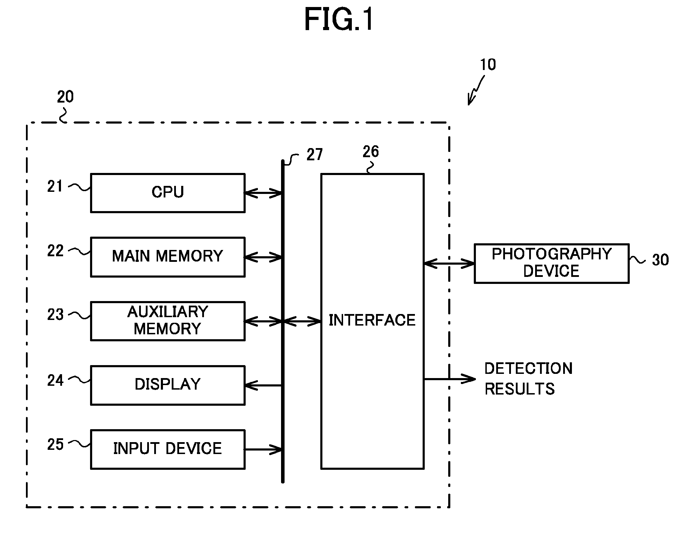

Below, a first preferred embodiment of the present invention is described with reference to the drawings. FIG. 1 is a block diagram showing the summary composition of an eyelid detection device 10 according to this preferred embodiment. The eyelid detection device 10 is a device for detecting the eyelids of a driver from an image which shows the driver's face. As shown in FIG. 1, the eyelid detection device 10 comprises a computation device 20 and a photography device 30.

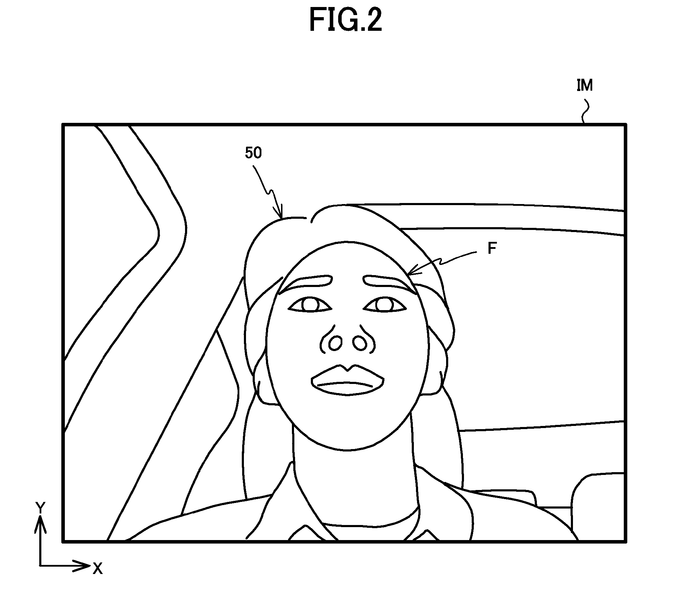

The photography device 30 is a device for converting images acquired by photographing a subject into electrical signals and outputting these signals. The photography device 30 is for example mounted on the steering column or attached to the steering wheel. FIG. 2 shows an image IM shot by the photography device 30. As can be seen by referencing the image IM, the attachment angle and angle of view of the photography device 30 are adjusted so that the face of a driver 50 seated in the vehicle's driver's seat is positioned substantially in the center of the field of vision. Furthermore, the photography device 30 shoots the face of the driver 50 with a prescribed sampling frequency, and outputs to the computation device 20 image information related to the images obtained through shooting. In this preferred embodiment, the photography device 30 outputs image information related to four images each second, for example.

For convenience in explaining, an XY coordinate system is defined with the lower left corner of the image IM as the origin, and the explanation below will use the XY coordinate system as appropriate.

Returning to FIG. 1., the computation device 20 is a computer comprising a CPU (Central Processing Unit) 21, a main memory 22, an auxiliary memory 23, a display 24, an input device 25 and an interface 26.

The CPU 21 reads and executes programs stored in the auxiliary memory 23. Specific operations of the CPU 21 are described below.

The main memory 22 comprises volatile memory such as RAM (Random Access Memory) and/or the like. The main memory 22 is used as a work area for the CPU 21.

The auxiliary memory 23 comprises non-volatile memory such as ROM (Read Only Memory), a magnetic disk, semiconductor memory and/or the like. The auxiliary memory 23 stores programs executed by the CPU 21 and various types of parameters. In addition, the auxiliary memory 23 successively stores information related to images output from the photography device 30 and information including process results from the CPU 21.

The display 24 comprises a display unit such as an LCD (Liquid Crystal Display) and/or the like. The display 24 displays process results from the CPU 21, and/or the like.

The input device 25 comprises input keys and a pointing device such as a touch panel and/or the like. Instructions from an operator are input via the input device 25 and are communicated to the CPU 21 via a system bus 27.

The interface 26 is composed so as to include a serial interface or a LAN (Local Area Network) interface, and/or the like. The photography device 30 is connected to the system bus 27 via the interface 26.

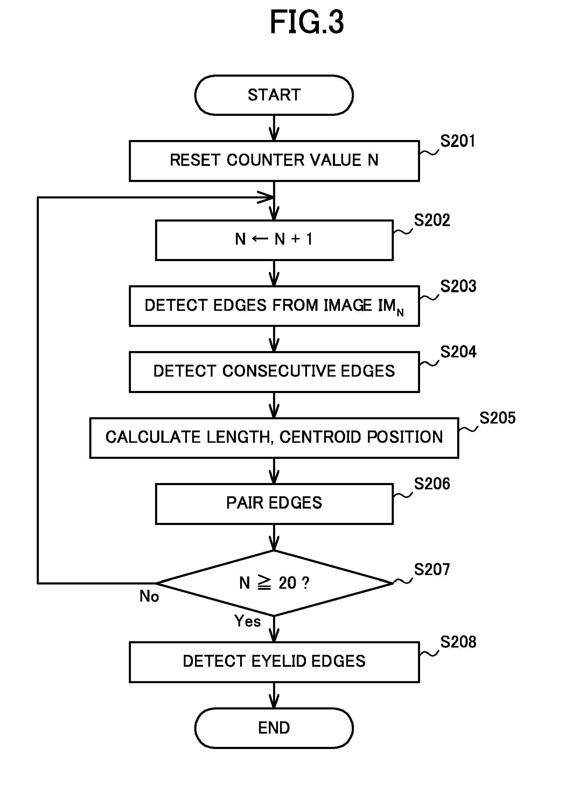

The flowchart in FIG. 3 corresponds to a series of process algorithms of an eyelid detection process program executed by the CPU 21. The operation of the eyelid detection device 10 is described below with reference to FIG. 3. The series of processes shown in the flowchart of FIG. 3 is executed at fixed intervals for example when the vehicle's ignition switch is turned on. In addition, in the explanation below, it is assumed that the image IM shown in FIG. 2 has been shot by the photography device 30.

First, in step S201, the CPU 21 resets to zero the counter value N of a built-in counter.

In the ensuing step S202, the CPU 21 increments the counter value N.

In the ensuing step S203, the CPU 21 acquires image information of images $IM_N$ successively accumulated in the auxiliary memory 23 and detects edges in these images $IM_N$. Detection of the edges is accomplished through execution of image processing using a Sobel filter on the images $IM_N$.

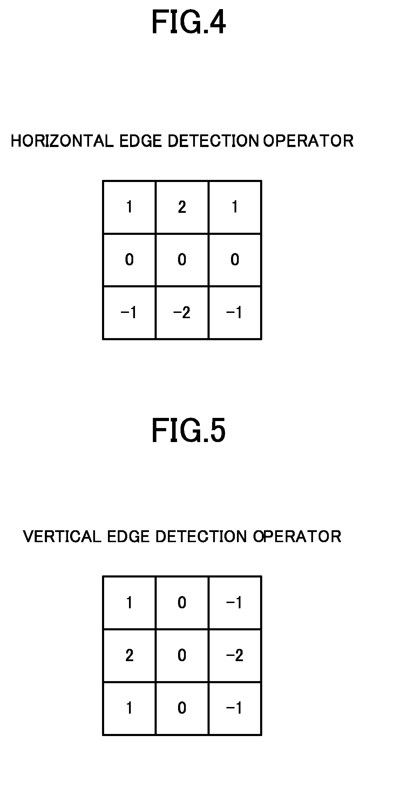

Specifically, the CPU 21 first computes respective edge values for each pixel comprising the image $IM_N$ using the horizontal edge detection operator shown in FIG. 4. This edge value is + (a positive value) when the brightness of the pixel on the top side (+Y side) of the pixel that is the subject of edge value computation is high and the brightness of the pixel on the bottom side (-Y side) is low. Furthermore, this edge value is - (a negative value) when the brightness of the pixel on the top side (+Y side) of the pixel that is the subject of edge value computation is low and the brightness of the pixel on the bottom side (-Y side) is high. The CPU 21 then extracts pixels having an edge value at least as great as a first threshold value and pixels with an edge value no greater than a second threshold value.

Next, the CPU 21 computes the edge value of each pixel comprising the image $IM_N$, using the vertical edge detection operator shown in FIG. 5. This edge value is + (a positive value) when the brightness of the pixel on the left side (-X side) of the pixel that is the subject of edge value computation is high and the brightness of the pixel on the right side (+X side) is low. Furthermore, this edge value is - (a negative value) when the brightness of the pixel on the left side (-X side) of the pixel that is the subject of edge value computation is low and the brightness of the pixel on the right side (+X side) is high. The CPU 21 then extracts pixels having an edge value at least as great as a first threshold value and pixels with an edge value no greater than a second threshold value.

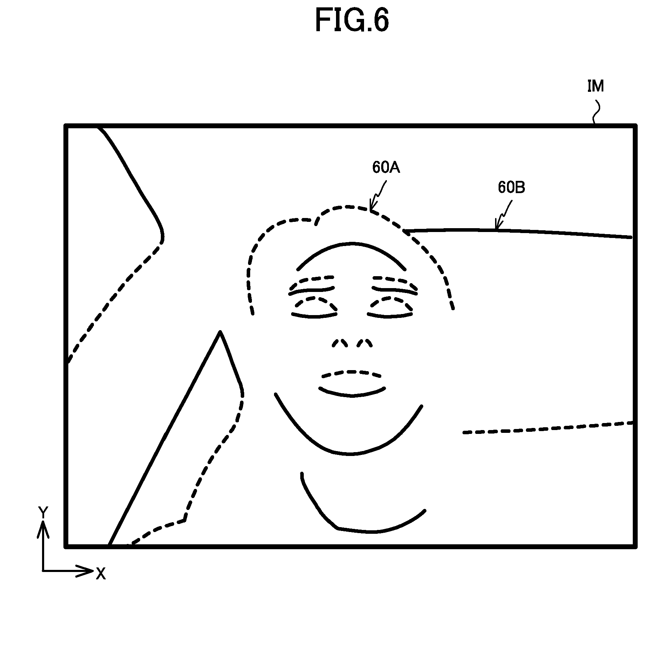

The pixels extracted by the CPU 21 in the above-described manner comprise edges 60A and 60B indicated by the broken lines and solid lines in FIG. 6. The edges 60A indicated by broken lines are plus edges composed of pixels whose total edge values are +. In addition, the edges 60B indicated by solid lines are minus edges composed of pixels whose total edge values are -.

In the ensuing step S204, the CPU 21 accomplishes detection of consecutive edges. Specifically, the CPU 21 groups pixels that are mutually adjacent and have edge values whose positive and negative polarities are equal, out of the pixels extracted in step S203. Through this, multiple pixel groups each composed of multiple pixels are stipulated. Next, the CPU 21 detects, as consecutive edges, groups whose length in the horizontal direction (X-axis direction) is at least as great as a threshold value, from among the multiple pixel groups.

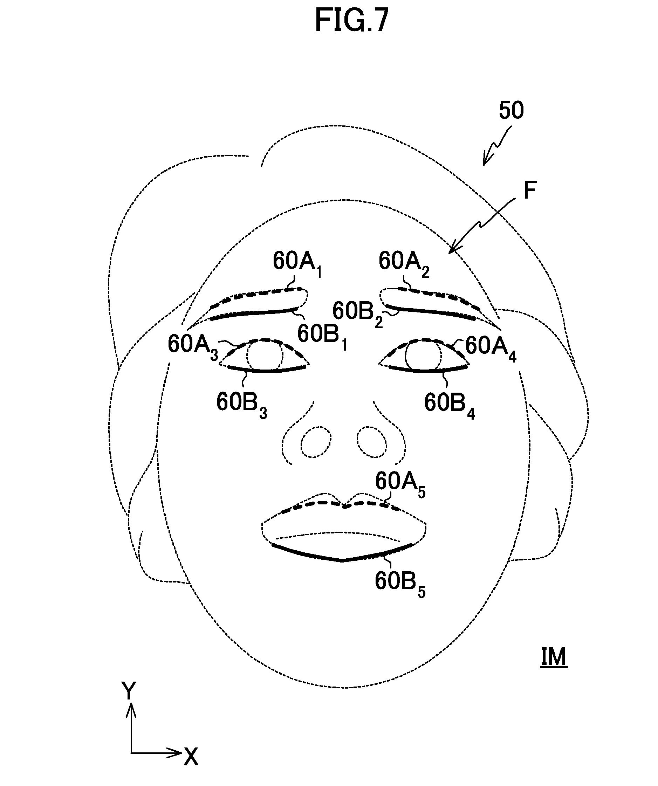

For example, the edge $60A_5$ shown in FIG. 7 is composed of pixels with a + polarity which continue in the X-axis direction. When edge detection by the CPU 21 is accomplished, pixel groups composed of pixels that are mutually adjacent and have equal polarity are detected as consecutive edges, as exemplified by the edge $60A_5$. Through this, the edges 60A and 60B indicated by broken lines and solid lines in FIG. 6 are detected.

In the ensuing step S205, the CPU 21 computes the centroid and length of each of the edges 60A and 60B.

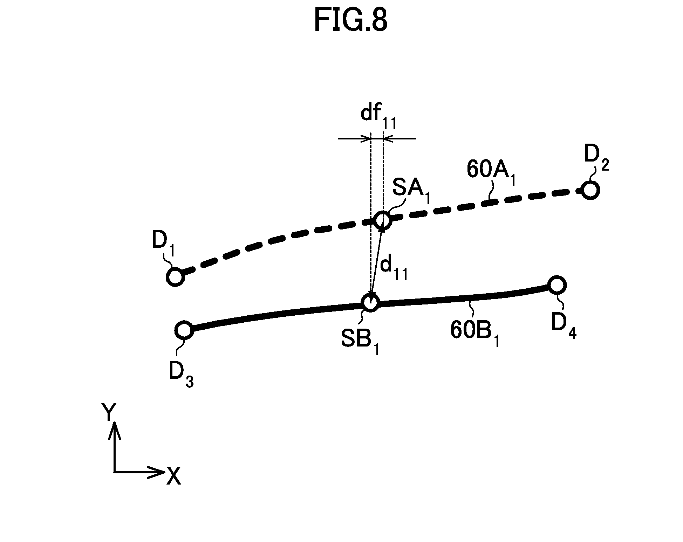

For example, as can be seen by referring to FIG. 8, when the CPU 21 finds the centroid of the edge $60A_1$, the X-coordinate $AX_1$ of the centroid $SA_1$ is computed by performing the computation indicated by equation (1) below, using the X-coordinates $X_1$ and $X_2$ of the points $D_1$ and $D_2$ at the two ends of the edge $60A_1$. Furthermore, the CPU 21 computes, as the centroid $SA_1$, the point on the edge $60A_1$ having $AX_1$ as the X-coordinate.

$$AX_1 = (X_1 + X_2)/2 \quad ....... \quad (1)$$

Similarly, the CPU 21 when finding the centroid of the edge $60B_1$ computes the X-coordinate $BX_1$ of the centroid $SB_1$ by performing the computation indicated by equation (2) below, using the X-coordinates $X_3$ and $X_4$ of the points $D_3$ and $D_4$ at the two ends of the edge $60B_1$. Furthermore, the CPU 21 computes, as the centroid $SB_1$, the point on the edge $60B_1$ having $BX_1$ as the X-coordinate.

$$BX_1 = (X_3 + X_4)/2 \quad ....... \quad (2)$$

In addition, it is possible to find the lengths of the edges 60A and 60B for example by computing the lengths of curves fitted to the edges 60A and 60B.

In the ensuing step S206, the CPU 21 accomplishes edge pairing. Although there is some difference between individuals in the size of the eyelids, it is possible to roughly predict the size thereof. Hence, the CPU 21 extracts candidates for eyelid edges based on the size in the X-axis direction (width) of the edges 60A and 60B. Through this, extremely long edges and extremely short edges are excluded from candidates for eyelid edges.

Next, the CPU 21 extracts combinations of edges 60A and 60B such that the difference between centroid positions in the horizontal direction for the edge 60A and the edge 60B is not greater than a reference value and the distance between the centroid SA of the edge 60A and the centroid SB of the edge 60B is not greater than a reference value.

For example, as can be seen by referring to FIG. 8, the CPU 21 computes the difference $df_{11}$ between the X-coordinate $AX_1$ of the centroid $SA_1$ of the edge $60A_1$ and the X-coordinate $BX_1$ of the centroid $SB_1$ of the edge $60B_1$. In addition, the CPU 21 computes the distance $d_{11}$ between the centroid $SA_1$ of the edge $60A_1$ and the centroid $SB_1$ of the edge $60B_1$. Then the CPU 21 pairs the edge $60A_1$ and the edge $60B_1$ when the difference $df_{11}$ and the distance $d_{11}$ are each not greater than prescribed reference values.

The CPU 21 accomplishes pairing of the edges $60A_i$ and the edges $60B_j$ by accomplishing the above-described process for each edge $60A_i$ and each edge $60B_j$. Through this, as can be seen by referring to FIG. 7, the edge $60A_1$ and the edge $60B_1$, the edge $60A_2$ and the edge $60B_2$, the edge $60A_3$ and the edge $60B_3$, the edge $60A_4$ and the edge $60B_4$ and the edge $60A_5$ and the edge $60B_5$ are respectively paired.

The edge $60A_1$ is the edge on the top side of the right eyebrow of the driver 50, and the edge $60B_1$ is the edge on the lower side of the right eyebrow. The edge $60A_2$ is the edge on the top side of the left eyebrow of the driver 50, and the edge $60B_2$ is the edge on the lower side of the left eyebrow. The edge $60A_3$ is the edge of the top eyelid of the right eye of the driver 50, and the edge $60B_3$ is the edge of the lower eyelid of the right eye. The edge $60A_4$ is the edge of the top eyelid of the left eye of the driver 50, and the edge $60B_4$ is the edge of the lower eyelid of the left eye. The edge $60A_5$ is the edge on the top side of the upper lip of the driver 50, and the edge $60B_5$ is the edge on the lower side of the lower lip.

In addition, the CPU 21 stores the distances $d_{ij}$ between the respectively paired edges $60A_i$ and $60B_j$, linked with the time $t_N$ at which the image $IM_N$ was shot, as data $Dij_N$ ($d_{ij}$, $t_N$) in the auxiliary memory 23. Through this, the data $Dij_N$ ($d_{ij}$, $t_N$) is stored chronologically.

In the ensuing step S207, the CPU 21 determines whether or not the counter value N is at least 20. When the determination in step S207 is negative (step S207: No), the CPU 21 returns to step S202. Following this, the CPU 21 repeatedly executes the processes from step S202 through step S207. Through this, the processes of detecting the edges and pairing the edges are accomplished for respective images $IM_1$ to $IM_{20}$. Furthermore, the data $Dij_N$ ($d_{ij}$, $t_N$) is stored chronologically in the auxiliary memory 23.

With this preferred embodiment, image information related to four images IM are output to the computation device 20 each second. Consequently, this data $Dij_1$ ($d_{ij}$, $t_1$) to $Dij_{20}$ ($d_{ij}$, $t_{20}$) is data from when the driver 50 was observed for around 5 seconds.

On the other hand, when the determination in step S207 is affirmative (step S207: Yes), the CPU 21 moves to step S208.

In step S208, the CPU 21 detects the pair that is the edge of the upper eyelid and the edge of the lower eyelid, from among the edges that were paired. Specifically, the CPU 21 detects the pair that is the edge of the upper eyelid and the edge of the lower eyelid by accomplishing the below-described first process, second process, third process and fourth process.

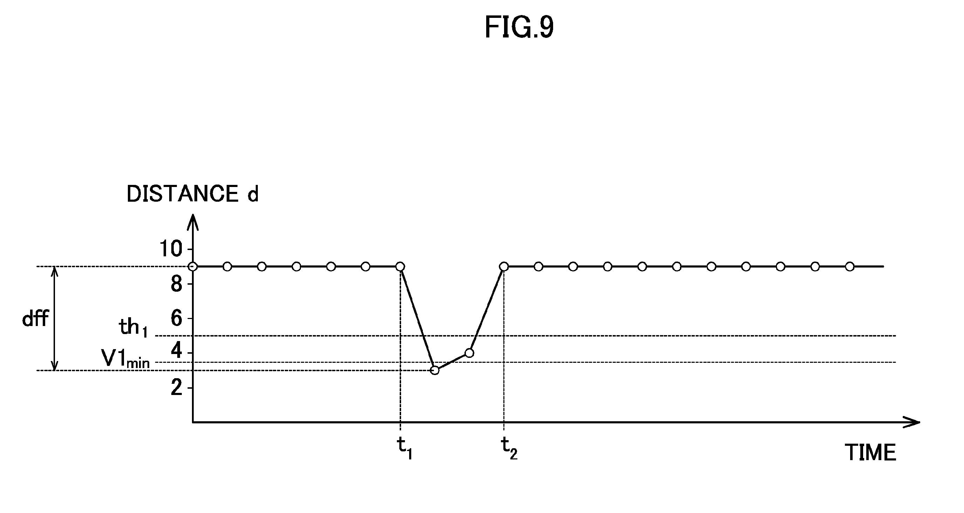

For example, FIG. 9 shows points plotted on a coordinate system with the vertical axis being the distance d and the horizontal axis being time. These points are points specified by the data $Dij_N$ ($d_{ij}$, $t_N$) corresponding to the edge of the upper eyelid and the edge of the lower eyelid. In addition, this series of data $Dij_N$ ($d_{ij}$, $t_N$) is for when a blink occurs during the interval from a time $t_1$ to a time $t_2$.

As shown in FIG. 9, when the eyes of the driver 50 are open, the distance d between the edge of the upper eyelid of the driver 50 and the edge of the lower eyelid is at least as great as a threshold value $th_1$. On the other hand, when the eyes of the driver 50 are closed, the distance d between the edge of the upper eyelid of the driver 50 and the edge of the lower eyelid is smaller than the threshold value $th_1$.

Furthermore, when the data $Dij_N$ ($d_{ij}$, $t_N$) is data corresponding to the edge of the upper eyelid and the edge of the lower eyelid, the number M1 of data items $Dij_N$ ($d_{ij}$, $t_N$) having a distance $d_{ij}$ at least as great as the threshold value $th_1$ is dominant over the number of data items $Dij_N$ ($d_{ij}$, $t_N$) having a distance $d_{ij}$ smaller than the threshold value $th_1$.

(First process)

Here, the CPU 21 reads the data $Dij_N$ ($d_{ij}$, $t_N$) from the auxiliary memory 23. Then, the CPU 21 accomplishes the computation shown in equation (3) below, using the minimum value $d_{MIN}$ and the maximum value $d_{MAX}$ of the distances $d_{ij}$, from among the data $Dij_N$ ($d_{ij}$, $t_N$) that was read, and calculates the threshold value th ($th_1$, $th_2$, $th_3$).

$$[0051] \qquad th = d_{MIN} + ((d_{MAX} - d_{MIN}) / 3) \quad \ldots \qquad (3)$$

Then, the CPU 21 counts the number M (M1, M2) of data items $Dij_N$ ($d_{ij}$, $t_N$) having a distance $d_{ij}$ at least as great as the threshold value th. Then, when the value of M is smaller than a reference value, the CPU 21 excludes the pair of edges corresponding to the data $Dij_N$ ($d_{ij}$, $t_N$) that was read from candidates for the edge of the upper eyelid and the edge of the lower eyelid.

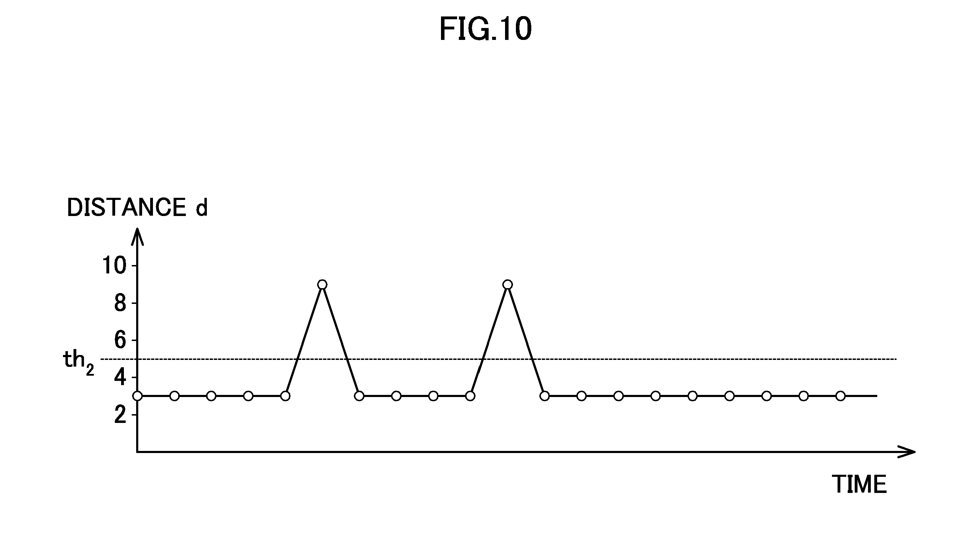

For example, as shown in FIG. 10, when the number M2 of data items $Dij_N$ ($d_{ij}$, $t_N$) having a distance $d_{ij}$ smaller than the threshold value $th_2$ is dominant over the number of data items $Dij_N$ ($d_{ij}$, $t_N$) having a distance $d_{ij}$ at least as great as the threshold value $th_2$, the CPU 21 excludes the pair of edges corresponding to that data item $Dij_N$ ($d_{ij}$, $t_N$) from the candidates for the edge of the upper eyelid and the edge of the lower eyelid. The data shown in FIG. 10 is for example data related to a pair of edges from an eyeglasses frame. Consequently, with the above-described process, pairs from eyeglasses frames and/or the like are excluded from the candidates.

(Second process)

As can be seen by referring to FIG. 9, when the driver 50 blinks, the distance d is less than a prescribed reference value $V1_{min}$ (for example, 3.5). Hence, the CPU 21 extracts the minimum value $d_{MIN}$ of the distances $d_{ij}$ from among the data items $Dij_N$ ($d_{ij}$, $t_N$) read from the auxiliary memory 23. Then the CPU 21 compares this minimum value $d_{MIN}$ and the reference value $V1_{min}$. When the minimum value $d_{MIN}$ of the distances $d_{ij}$ is larger than the reference value $V1_{min}$, the CPU 21 excludes the pair of edges corresponding to that data $Dij_N$ ($d_{ij}$, $t_N$) from the candidates for the edge of the upper eyelid and the edge of the lower eyelid.

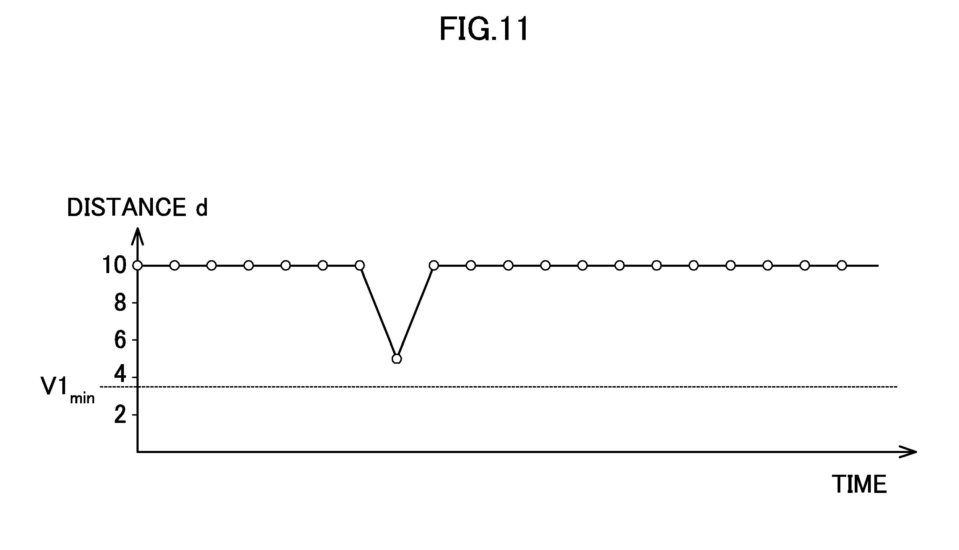

For example, as shown in FIG. 11, when the minimum value $d_{MIN}$ of the distance $d_{ij}$ is larger than the reference value $V1_{min}$, the CPU 21 excludes the pair of edges corresponding to that data $Dij_N$ ($d_{ij}$, $t_N$) from the candidates for the edge of the upper eyelid and the edge of the lower eyelid. The data shown in FIG. 11 is for example data related to the pairs of edges $60A_1$ and $60A_2$ on the upper side and edges $60B_1$ and $60B_2$ on the lower side of the eyebrows. Consequently, with the above-described process, the pairs of edges of the eyebrows are excluded from the candidates.

(Third process)

As shown in FIG. 9, the difference between the distance d when the driver 50 has his or her eyes open and the distance d when the eyes are closed becomes a certain size (for example, 6). The CPU 21 extracts the maximum value $d_{MAX}$ of the distances $d_{ij}$ and the minimum value $d_{MIN}$ of the distance $d_{ij}$ from the data $Dij_N$ ($d_{ij}$, $t_N$) read from the auxiliary memory 23. Then, the CPU 21 compares the difference dff (= $d_{MAX}$ - $d_{MIN}$) between the maximum value $d_{MAX}$ and the minimum value $d_{MIN}$ to a reference value $V2_{min}$. When the result of the comparison is that the difference dff is smaller than the reference value $V2_{min}$, the CPU 21 excludes the pair of edges corresponding to that data item $Dij_N$ ($d_{ij}$, $t_N$) from the candidates for the edge of the upper eyelid and the edge of the lower eyelid.

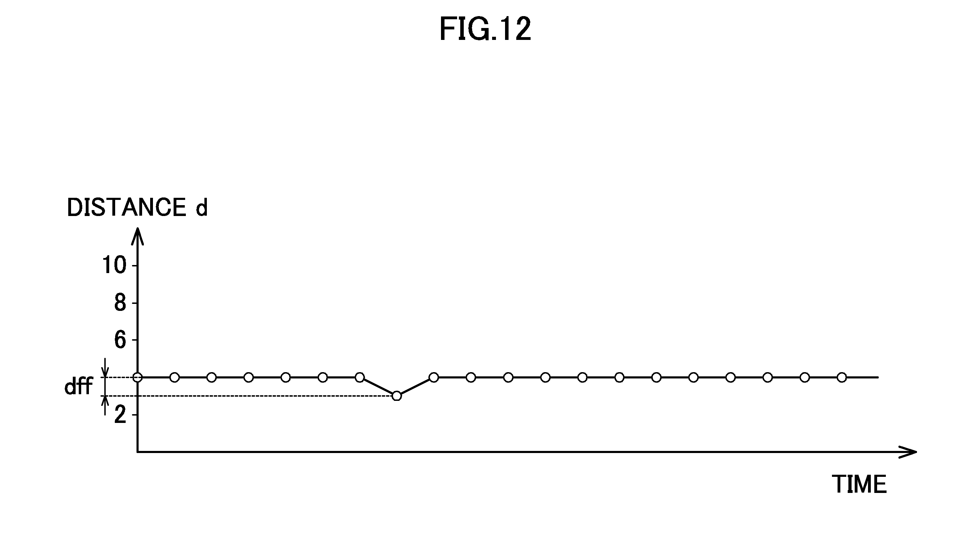

For example, as can be seen by referring to FIG. 12, when the difference dff (= $d_{MAX}$ - $d_{MIN}$) is relatively small and is smaller than the reference value $V2_{min}$, the CPU 21 excludes the pair of edges corresponding to that data $Dij_N$ ($d_{ij}$, $t_N$) from the candidates for the edge of the upper eyelid and the edge of the lower eyelid. The data shown in FIG. 12 is data related to the pairs of edges $60A_1$ and $60A_2$ of the upper side and edges $60B_1$ and $60B_2$ on the lower side of the eyebrows. Consequently, with the above process, the pairs of edges of the eyebrows are excluded from the candidates.

(Fourth process)

The distance d when the driver 50 has his or her eyes open converges to a roughly constant value (here, 9), as scan be seen by referring to FIG. 9. The CPU 21 performs the computation shown in above-described equation (3) using the minimum value $d_{MIN}$ and the maximum value $d_{MAX}$ of the distance $d_{ij}$ from the data $Dij_N$ ($d_{ij}$, $t_N$) that was read, and computes the threshold value $th_3$. Then, the CPU 21 computes the variance vr of the data $Dij_N$ ($d_{ij}$, $t_N$) having a distance $d_{ij}$ at least as great as the threshold value $th_3$. When this variance vr is larger than a prescribed reference value $V3_{min}$, the CPU 21 excludes the pairs of edges corresponding to the data $Dij_N$ ($d_{ij}$, $t_N$) that was read from the candidates for the edge of the upper eyelid and the edge of the lower eyelid.

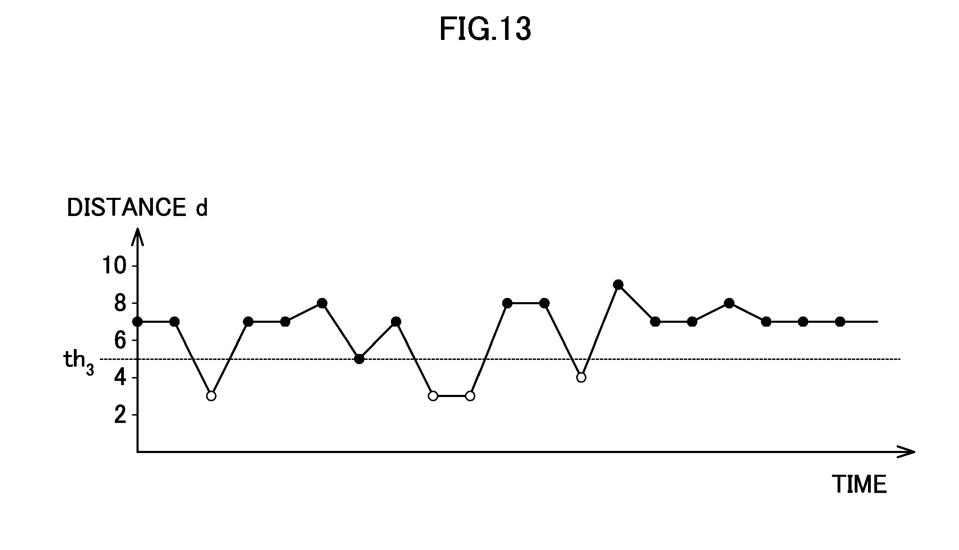

For example, the CPU 21 computes the variance vr of the data $Dij_N$ ($d_{ij}$, $t_N$) corresponding to the points indicated by the filled-in dots in FIG. 13. Then, when this variance vr is larger than the prescribed threshold value $V3_{min}$, the CPU 21 excludes the pairs of edges corresponding to the data $Dij_N$ ($d_{ij}$, $t_N$) that was read from the candidates for the edge of the upper eyelid and the edge of the lower eyelid. The data shown in FIG. 13 is for example data related to the pair of the edge $60A_5$ of the upper lip and the edge $60B_5$ of the lower lip. Consequently, the pair of edges of the lips is excluded from the candidates by the above-described process.

When the first through fourth processes are executed by the CPU 21, the pairs of edges of the eyebrows, the pair of edges of the lips and/or the like are excluded. Through this, only the data $Dij_N$ ($d_{ij}$, $t_N$) corresponding to the edges $60A_3$ and $60A_4$ of the upper eyelids and the edges $60B_3$ and $60B_4$ of the lower eyelids as shown in FIG. 9 remain, having not been excluded. Hence, the CPU 21 detects the pair comprising the edge $60A_3$ and the edge $60B_3$ corresponding to the data $Dij_N$ ($d_{ij}$, $t_N$) that remains having not been excluded as the pair of edges of the upper eyelid of the right eye and the lower eyelid of the right eye. In addition, the CPU 21 detects the pair comprising the edge $60A_4$ and the edge $60B_4$ as the pair of edges of the upper eyelid of the left eye and the lower eyelid of the left eye.

When detection of the pairs of edges of the eyelids of the driver 50 concludes, the CPU 21 concludes the series of processes. Following this, the CPU 21 observes the pair of edges $60A_3$ and $60B_3$ and the pair of edges $60A_4$ and $60B_4$ included in the image IM output from the photography device 30 as the edges of the eyelids of both eyes. Then the CPU 21 samples the frequency and intervals of blinking by the driver 50. When for example the distance $d_{33}$ between the edge $60A_3$ and the edge $60B_3$ or the distance $d_{44}$ between the edge $60A_4$ and the edge $60B_4$ becomes smaller than a prescribed threshold value and then becomes a constant size, the CPU 21 determines that the driver 50 has blinked.

The CPU 21 outputs the blink sampling results for example to an external device and/or the like. Through this, it is possible to observe the wakefulness and/or the like of the driver 50 driving the vehicle.

As explained above, with this first preferred embodiment, distances d between edges detected and paired from the image IM are successively computed. Then, low-probability candidates for pairs of edges of the eyelids are excluded based on changes in the computed distance d. The pairs of edges ultimately remaining as a result of this exclusion are detected as pairs of edges of the upper eyelids and lower eyelids. Consequently, detection taking into consideration not only a feature that is near to an eyelid edge but also movement as an eyelid is accomplished. Accordingly, it is possible to accurately detect the edges of the eyelids of the driver 50.

Specifically, for example as shown in FIG. 10, when the number M2 of data items $Dij_N$ ($d_{ij}$, $t_N$) having a distance $d_{ij}$ smaller than the threshold value $th_2$ is dominant over the number of data items $Dij_N$ ($d_{ij}$, $t_N$) having a distance $d_{ij}$ at least as great as the threshold value $th_2$, the pairs of edges corresponding to those data items $Dij_N$ ($d_{ij}$, $t_N$) are excluded from the candidates for upper eyelid edges and lower eyelid edges. Through this, pairs of edges related to the frames of eyeglasses, for example, do not become candidates for eyelid edges. As a result, it is possible to accurately detect the edges of the eyelids of the driver 50.

In addition, for example as shown in FIG. 11, when the minimum value $d_{MIN}$ of the distances $d_{ij}$ is larger than a reference value $V1_{min}$, the pairs of edges corresponding to the data $Dij_N$ ($d_{ij}$, $t_N$) are excluded from the candidates for upper eyelid edges and lower eyelid edges. Through this, the pairs of edges of the eyebrows and/or the like do not become candidates for the eyelid edges. As a result, it is possible to accurately detect the edges of the eyelids of the driver 50.

In addition, for example as shown in FIG. 12, when the difference dff (= $d_{MAX}$ - $d_{MIN}$) between the maximum value $d_{MAX}$ and the minimum value $d_{MIN}$ is relatively small and is smaller than the reference value $V2_{min}$, the pairs of edges corresponding to the data $Dij_N$ ($d_{ij}$, $t_N$) are excluded from the candidates for the upper eyelid edges and the lower eyelid edges. Through this, the pairs of edges of the eyebrows and/or the like do not become candidates for the eyelid edges. As a result, it is possible to accurately detect the edges of the eyelids of the driver 50.

In addition, when the variance vr of the data $Dij_N$ ($d_{ij}$, $t_N$) corresponding to the filled-in dots in FIG. 13 is larger than a prescribed reference value $V3_{min}$, the pairs of edges corresponding to that data $Dij_N$ ($d_{ij}$, $t_N$) are excluded from the candidates for the upper eyelid edges and the lower eyelid edges. Through this, the pairs of edges of the lips and/or the like do not become candidates for eyelid edges. As a result, it is possible to accurately detect the edges of the eyelids of the driver 50.

(Second preferred embodiment)

Next, a second preferred embodiment of the present invention is described with reference to the drawings. The same reference signs are used for compositions that are the same as or similar to the first preferred embodiment, and explanation of such is omitted or abbreviated.

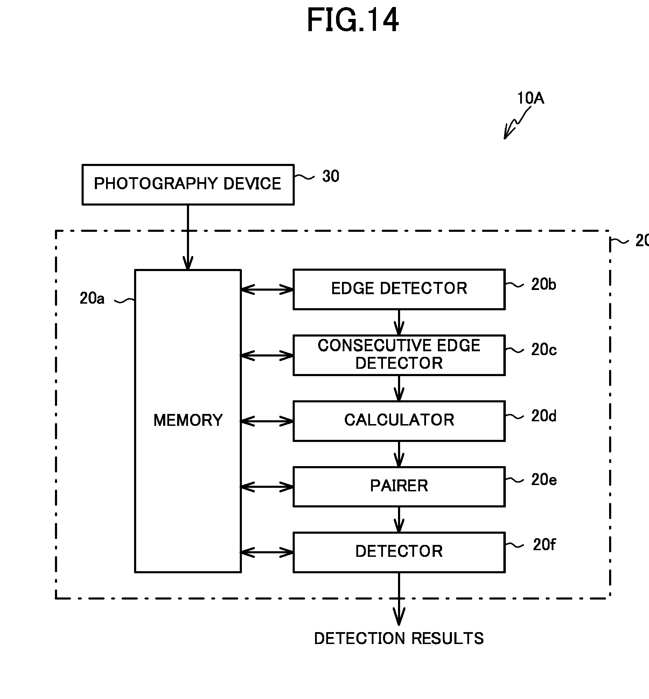

An eyelid detection device 10A according to this preferred embodiment is different from the eyelid detection device 10 according to the first preferred embodiment in that the computation device 20 comprises hardware for executing a series of processes. As shown in FIG. 14, the computation device 20 comprises a memory 20a, an edge detector 20b, a consecutive edge detector 20c, a calculator 20d, a pairer 20e and a detector 20f.

The memory 20a successively records information related to images output from the photography device 30 and information including process results from the above-described components 20b-20f.

The edge detector 20b acquires image information for images $IM_N$ successively accumulated in the memory 20a and detects edges in the images $IM_N$. This edge detection is accomplished by executing an image process using a Sobel filter on the images IM.

The consecutive edge detector 20c accomplishes detection of consecutive edges. Specifically, the consecutive edge detector 20c groups pixels that are mutually adjacent and have the same polarity in edge values, out of the pixels extracted by the edge detector 20b. Through this, multiple pixel groups are stipulated, each composed of multiple pixels. Next, the consecutive edge detector 20c detects as consecutive edges groups whose length in the horizontal direction (X-axis direction) is at least as great as a threshold value, from among the multiple pixel groups. Through this, the edges 60A and 60B indicated by the broken lines and solid lines in FIG. 6 are detected.

The calculator 20d calculates the centroids SA and SB and the lengths of the edges 60A and 60B, respectively.

The pairer 20e accomplishes pairing of the edges. Eyelid sizes differ from individual to individual, but it is possible to roughly predict the size thereof. Hence, the pairer 20e extracts candidates for the edges of the eyelids based on the sizes (widths) of the edges $60A_i$ and $60B_j$ in the X-axis direction. Next, the pairer 20e extracts pairs of edges $60A_i$ and $60B_j$ for which the difference in the centroid positions of the edge $60A_i$ and the edge $60B_j$ in the horizontal direction is not greater than a reference value and for which the distance between the centroid $SA_i$ of the edge $60A_i$ and the centroid $SB_j$ of the edge $60B_j$ is not greater than a reference value.

In addition, the pairer 20e stores the distances $d_{ij}$ between the paired edges $60A_i$ and $60B_j$ linked with the time

$t_N$ when the image $IM_N$ was shot in the auxiliary memory 23 as data $Dij_N$ ($d_{ij}$, $t_N$). Through this, the data $Dij_N$ ($d_{ij}$, $t_N$) is preserved chronologically.

The detector 20f detects the pairs of edges of the upper eyelids and the lower eyelids from the paired edges. Specifically, the detector 20f detects the pairs of upper eyelid edges and lower eyelid edges by accomplishing the above-described first process, second process, third process and fourth process. Then, the detector 20f outputs the detection results for example to an external device and/or the like.

As described above, with this second preferred embodiment, distances d between paired edges detected from the image IM are successively calculated. Then, low-probability candidates for pairs of eyelid edges are excluded based on changes in the calculated distances. Pairs of edges ultimately remaining as the exclusion result are detected as pairs of upper eyelid edges and lower eyelid edges. Consequently, detection is accomplished not just based on a feature which is near to an eyelid edge but also taking into consideration movement as an eyelid. Accordingly, it is possible to accurately detect the edges of the eyelids of the driver 50.

The explanation above was for preferred embodiments of the present invention, but the present invention is not limited by the above-described preferred embodiments.

For example, in the above-described preferred embodiments, the photography device 30 was assumed to output image information related to four images per second. This is intended to be illustrative and not limiting, for it would be fine for the photography device 30 to output image information related to a number of images equal to the frame rate, and for the computation device 20 to accomplish the processes for detecting pairs of eyelid edges based on the chronological data of all image information input in 20 seconds.

In the above-described preferred embodiment, the threshold value th was calculated based on the above-described equation (3). This is one example of the computation equation, and it would be fine to calculate the threshold value th using another equation.

It is possible to realize the functions of the computation device 20 according to the above-described preferred embodiments through specialized hardware and also through a regular computer system.

It would be fine for the programs stored in the auxiliary memory 23 of the computation device 20 in the above-described first preferred embodiment to be stored and distributed on a computer-readable recording medium such as flexible disk, CD-ROM (Compact Disk Read-Only Memory), DVD (Digital Versatile Disk), MO (Magneto-Optical disk) and/or the like, and to comprise the device for executing the above-described processes by installing those programs on a computer.

Having described and illustrated the principles of this application by reference to one or more preferred embodiments, it should be apparent that the preferred embodiments may be modified in arrangement and detail without departing from the principles disclosed herein and that it is intended that the application be construed as including all such modifications and variations insofar as they come within the spirit and scope of the subject matter disclosed herein.

This application claims the benefit of Japanese Patent Application No. 2011-147470, filed on 1 July, 2011, the entire disclosure of which is incorporated by reference herein.

Industrial Applicability

The eyelid detection device, eyelid detection method and program are suitable for detecting eyelids.

Reference Signs List

| | |
|---|---|
| 10, 10A | Eyelid detection device |
| 20 | Computation device |
| 20a | Memory |
| 20b | Edge detector |
| 20c | Consecutive edge detector |
| 20d | Calculator |
| 20e | Pairer |
| 20f | Detector |
| 21 | CPU |
| 22 | Main memory |
| 23 | Auxiliary memory |
| 24 | Display |
| 25 | Input device |
| 26 | Interface |

| 27 | System bus |
| 30 | Photography device |
| 50 | Driver |
| 60A, 60B | Edge |
| D | Points |
| Dij | Data |
| F | Face |
| IM | Image |
| SA, SB | Centroid |

**Claims**

**1.** An eyelid detection device, comprising:

edge detector means for detecting edges from images of the face of a driver successively photographed in a prescribed interval;
extraction means for extracting first edges that are candidates for upper eyelid edges of the driver and second edges that are candidates for lower eyelid edges, from the detected edges;
pairing means for pairing the first edges and the second edges;
threshold calculation means for calculating, in accordance with changes in the distances between the paired first edges and second edges, a threshold value larger than the minimum value of the distances and smaller than the maximum value of the distances;
determination means for determining whether or not to exclude first edges from candidates for an upper eyelid edge of the driver and determining whether or not to exclude second edges from candidates for a lower eyelid edge of the driver, based on the frequency with which the distance is at least as great as the threshold value; and
detection means for excluding first edges and second edges based on determination results from the determination means, and detecting a pair constituting an upper eyelid edge and a lower eyelid edge of the driver, from among the remaining pairs of first edges and second edges.

**2.** The eyelid detection device according to Claim 1, wherein the threshold calculation means calculates the threshold value based on the maximum value and the minimum value of the distances between the paired first edges and second edges.

**3.** The eyelid detection device according to Claim 1 or 2, wherein the determination means makes the determination to exclude the first edges from candidates for an upper eyelid edge of the driver and to exclude second edges from candidates for a lower eyelid edge of the driver when the variance of distances between the first edges and the second edges is larger than a prescribed reference value.

**4.** The eyelid detection device according to any one of Claims 1 through 3, wherein the determination means makes the determination to exclude the first edges from candidates for an upper eyelid edge of the driver and to exclude second edges from candidates for a lower eyelid edge of the driver when the minimum value of the distances between the first edges and the second edges is larger than a prescribed reference value.

**5.** The eyelid detection device according to any one of Claims 1 through 4, wherein the determination means makes the determination to exclude the first edges from candidates for an upper eyelid edge of the driver and to exclude second edges from candidates for a lower eyelid edge of the driver when the difference between the maximum value and the minimum value of the distances between the first edges and the second edges is smaller than a prescribed reference value.

**6.** An eyelid detection method, including:

a process for detecting edges from images of the face of a driver successively photographed in a prescribed interval;
a process for extracting first edges that are candidates for upper eyelid edges of the driver and second edges that are candidates for lower eyelid edges, from the detected edges;
a process for pairing the first edges and the second edges;
a process for calculating, in accordance with changes in the distances between the paired first edges and second edges, a threshold value larger than the minimum value of the distances and smaller than the maximum value of the distances;

a process for determining whether or not to exclude first edges from candidates for an upper eyelid edge of the driver and determining whether or not to exclude second edges from candidates for a lower eyelid edge of the driver, based on the frequency with which the distance is at least as great as the threshold value; and

a process for excluding first edges and second edges based on results of the determination, and detecting a pair constituting an upper eyelid edge and a lower eyelid edge of the driver, from among the remaining pairs of first edges and second edges.

7.  A program for causing a computer to execute:

a procedure for detecting edges from images of the face of a driver successively photographed in a prescribed interval;

a procedure for extracting first edges that are candidates for upper eyelid edges of the driver and second edges that are candidates for lower eyelid edges, from the detected edges;

a procedure for pairing the first edges and the second edges;

a procedure for calculating, in accordance with changes in the distances between the paired first edges and second edges, a threshold value larger than the minimum value of the distances and smaller than the maximum value of the distances;

a procedure for determining whether or not to exclude first edges from candidates for an upper eyelid edge of the driver and determining whether or not to exclude second edges from candidates for a lower eyelid edge of the driver, based on the frequency with which the distance is at least as great as the threshold value; and

a procedure for excluding first edges and second edges based on results of the determination, and detecting a pair constituting an upper eyelid edge and a lower eyelid edge of the driver, from among the remaining pairs of first edges and second edges.

# FIG.1

# FIG.2

# FIG.3

START

RESET COUNTER VALUE N — S201

N ← N + 1 — S202

DETECT EDGES FROM IMAGE $IM_N$ — S203

DETECT CONSECUTIVE EDGES — S204

CALCULATE LENGTH, CENTROID POSITION — S205

PAIR EDGES — S206

$N \geqq 20$ ? — S207

No

Yes

DETECT EYELID EDGES — S208

END

# FIG.4

HORIZONTAL EDGE DETECTION OPERATOR

| 1 | 2 | 1 |
|---|---|---|
| 0 | 0 | 0 |
| −1 | −2 | −1 |

# FIG.5

VERTICAL EDGE DETECTION OPERATOR

| 1 | 0 | −1 |
|---|---|---|
| 2 | 0 | −2 |
| 1 | 0 | −1 |

# FIG.6

# FIG.7

# FIG.8

# FIG.9

# FIG.10

EP 2 728 550 A1

# FIG.11

EP 2 728 550 A1

# FIG.12

EP 2 728 550 A1

FIG.13

EP 2 728 550 A1

# FIG.14

10A

```
PHOTOGRAPHY DEVICE  ~ 30
```

20

```
           ┌──────────────┐        ┌─────────────────────┐
           │              │◄──────►│   EDGE DETECTOR     │ ~ 20b
20a ~      │              │        └─────────────────────┘
           │              │                   │
           │              │                   ▼
           │              │◄──────►│ CONSECUTIVE EDGE     │ ~ 20c
           │              │        │    DETECTOR          │
           │   MEMORY     │        └─────────────────────┘
           │              │                   │
           │              │                   ▼
           │              │◄──────►│    CALCULATOR       │ ~ 20d
           │              │        └─────────────────────┘
           │              │                   │
           │              │                   ▼
           │              │◄──────►│     PAIRER          │ ~ 20e
           │              │        └─────────────────────┘
           │              │                   │
           │              │                   ▼
           │              │◄──────►│    DETECTOR         │ ~ 20f
           └──────────────┘        └─────────────────────┘
                                              │
                                              ▼
                                    DETECTION RESULTS
```

<div align="center">**INTERNATIONAL SEARCH REPORT**</div>

| | International application No. |
|---|---|
| | PCT/JP2012/065435 |

**A. CLASSIFICATION OF SUBJECT MATTER**
*G06T7/20*(2006.01)i, *B60K28/06*(2006.01)i, *G06T1/00*(2006.01)i, *G08G1/16*(2006.01)i

According to International Patent Classification (IPC) or to both national classification and IPC

**B. FIELDS SEARCHED**

Minimum documentation searched (classification system followed by classification symbols)
G06T7/20, B60K28/06, G06T1/00, G08G1/16

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-192100 A (Aisin Seiki Co., Ltd., Toyota Motor Corp., Toyota Central Research and Development Laboratories, Inc.), 21 August 2008 (21.08.2008), paragraphs [0040] to [0045], [0109] to [0111] & US 2008/0212850 A1 & EP 1955647 A1 & CN 101241548 A | 1-7 |
| Y | JP 2008-226047 A (Aisin Seiki Co., Ltd., Toyota Motor Corp., Toyota Central Research and Development Laboratories, Inc.), 25 September 2008 (25.09.2008), paragraphs [0035] to [0054], [0117] to [0124]; fig. 6 (Family: none) | 1-7 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 September, 2012 (03.09.12) | 11 September, 2012 (11.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

<br>

<div align="center">

**INTERNATIONAL SEARCH REPORT**

</div>

| | International application No. |
|---|---|
| | PCT/JP2012/065435 |

**C (Continuation).   DOCUMENTS CONSIDERED TO BE RELEVANT**

| Category* | Citation of document, with indication, where appropriate, of the relevant passages | Relevant to claim No. |
|---|---|---|
| Y | JP 2010-224637 A  (Toyota Central Research and Development Laboratories, Inc., Toyota Motor Corp., Denso Corp., Aisin Seiki Co., Ltd., Hino Motors, Ltd.),<br>07 October 2010 (07.10.2010),<br>paragraphs [0028] to [0033]; fig. 3<br>& EP 2410501 A1          & WO 2010/107066 A1<br>& CN 102356416 A          & KR 10-2012-0006986 A | 1-7 |
| A | JP 2008-158922 A  (Aisin Seiki Co., Ltd., Toyota Motor Corp., Toyota Central Research and Development Laboratories, Inc.),<br>10 July 2008 (10.07.2008),<br>paragraphs [0035] to [0068], [0077] to [0079]<br>& US 2008/0151186 A1     & DE 102007055912 A1<br>& CN 101209207 A | 1-7 |
| A | JP 2008-226189 A  (Aisin Seiki Co., Ltd., Toyota Motor Corp., Toyota Central Research and Development Laboratories, Inc.),<br>25 September 2008 (25.09.2008),<br>paragraphs [0081] to [0094]; fig. 17 to 18<br>(Family: none) | 1-7 |

Form PCT/ISA/210 (continuation of second sheet) (July 2009)

**EP 2 728 550 A1**

**Patent documents cited in the description**

- JP 2009125518 A
- JP H9230436 B
- JP 2011147470 A